# NEUE EUROPÄISCHE PATENTSCHRIFT

(11) **EP 2 459 326 B2**
(45) Veröffentlichungstag und Bekanntmachung des Hinweises auf die Entscheidung über den Einspruch: **06.10.2021**
(45) Hinweis auf die Patenterteilung: 09.09.2015
(21) Anmeldenummer: 10754664.0
(22) Anmeldetag: 26.07.2010
(51) Int. Cl.: B08B 7/02, B08B 9/08, B29B 17/02, B29K 105/06, B29L 31/00, B29L 31/56, B29K 67/00

(54) **VORRICHTUNG ZUR VORREINIGUNG VON TEILEN AUS KUNSTSTOFF**
APPARATUS FOR PRECLEANING PLASTIC PARTS
APPAREIL POUR LE PRÉNETTOYAGE DE PIECES EN PLASTIQUE

(30) Priorität: 27.07.2009 DE 102009034899
(43) Veröffentlichungstag der Anmeldung: 06.06.2012
(60) Teilanmeldung: 14182316.1
(73) Patentinhaber: HERBOLD MECKESHEIM GMBH, 74909 Meckesheim (DE)
(72) Erfinder: HERBOLD, Karlheinz, 74909 Meckesheim (DE)
(74) Vertreter: Ullrich & Naumann PartG mbB
(86) Internationale Anmeldenummer: PCT/DE2010/000872
(87) Internationale Veröffentlichungsnummer: WO 2011/012113

(56) Entgegenhaltungen:
- WO-A1-2009/033587
- DE-A1- 10 308 500
- JP-A- 2002 316 101
- JP-A- 2002 316 104
- JP-A- 2005 125 139
- TW-U- M 283 694
- US-A- 4 599 131

## Beschreibung

Die Erfindung betrifft eine Vorrichtung zur Vorreinigung von gebrauchten Kunststoffflaschen im Rahmen eines Recycling-Prozesses, wobei an den Kunststoffflaschen zu entfernende Fremdkörper anhaften, nämlich Etiketten und Verschmutzungen, wobei die Fremdkörper ausschließlich durch mechanische Beanspruchung der Kunststoffflaschen in einem Gehäuse mit darin angeordnetem Rotor von diesen entfernt werden, wobei Gehäuse und Rotor relativ zueinander drehen, wobei die Zuführung der Kunststoffflaschen über Zwangsbeschickung in das Gehäuse erfolgt, wobei das Gehäuse aus ungelochtem Blech ausgeführt ist, und wobei der Rotor mit Beaufschlagungsmitteln ausgestattet ist, die als Stäbe, Flügel, Paddel oder dgl. ausgebildet sind.

Aus der Praxis sind Anlagen und Verfahren zum Aufbereiten von Kunststoffabfällen (z.B. PET-Flaschen) bekannt. Dabei werden Verschmutzungen entfernt, wobei die Kunststoffabfälle regelmäßig einer Nasswäsche unterzogen werden.

Oft ist sogar eine Heißwäsche erforderlich, und zwar unter Zugabe von Reinigungschemikalien, beispielsweise Natronlauge, NaOH, etc. Dabei wird das Waschmedium ständig regeneriert, was zu einem hohen Aufwand und zu erheblichen Umweltverschmutzungen führt, würde man das Waschmedium nach vollzogener Wäsche ins Abwasser geben.

In der JP 2005/125139 A1 und der TW M283694 U sind Vorrichtungen zum Lösen von Verunreinigungen von Plastikteilen bzw. vom Kunststoffflaschen beschrieben.

Ein besonderes Problem sind Verunreinigungen bzw. Fremdkörper an Kunststoffflaschen, beispielsweise an sogenannten PET-Flaschen. Zum Recyceln der PET-Flaschen müssen die Etiketten - bestehend aus anderem Material wie die Flasche und meist bedruckt - entfernt werden. Sie bestehen oftmals aus PVC und sind in einer konventionellen Waschanlage schwer entfernbar. Oftmals haften an den PET-Flaschen zudem sonstige Fremdkörper wie Steine, Glas, kleine Metallstücke, etc., die von einem Überbandmagneten nicht erfasst werden. Auch diese Fremdkörper sind von dem zu recycelnden Kunststoff zu entfernen.

Des Weiteren ist von Bedeutung, dass es sich bei den an den PET-Flaschen haftenden Fremdkörpern oftmals um abrasive Bestandteile handelt. Werden diese vor dem Zerkleinern bzw. Zermahlen der PET-Flaschen nicht entfernt, bedeutet dies einen erheblichen Verschleiß an der Mühle. Des Weiteren sind Restinhalte aus den Flaschen zu entfernen, da nämlich das klebrige Zuckerwasser zu Störungen bei der Weiterverarbeitung bzw. beim Recycling führt. Außerdem wird durch Restflüssigkeit in den Flaschen die Abwasseraufbereitung belastet.

Aus der WO 2009/033587 A1 sind ein Verfahren und eine Vorrichtung für das Entfernen und Trennen von Etiketten, insbesondere von rohrförmigen Etiketten, und generell von Kontaminierungen aus den zu recycelnden Plastikmaterial bestehenden Behältern bekannt, wobei die Behälter einen Waschvorgang und einem mechanischen Schleudern für das Entfernen der Etiketten und der Kontamination ausgesetzt sind, und in welchen die entfernten Etiketten und Kontaminationen aus den Behältern anschließend getrennt werden. Dabei sind Waschvorgänge mittels eines Waschmittels vorgesehen.

Die US 4,599,131 zeigt ebenfalls eine Vorrichtung zum Vorreinigen von Teilen aus Kunststoff im Rahmen eines Recycling-Prozesses. Im Konkreten zeigt die Druckschrift eine Vorrichtung mit beheizten aneinander geordneten Rollen zwischen denen die Oberfläche der Flaschen erhitzt und durch deren Druck die Flaschen flachgepresst werden. Die von den Rollen abgestrahlte bzw. übertragene Wärme löst des Weiteren die Etiketten von den Flaschen. Einige der Rollen umfassen eine bürstenartige Oberfläche, die die Etiketten von der Oberfläche der Flaschen entfernen sollen. Weitere Entscharber dienen ebenfalls der Entfernung von Etiketten auf der Flaschenoberfläche.

Die US 2003/0070754 A1 zeigt eine Waschvorrichtung in der mittels Dampf und heißem Wasser Etiketten von Flaschen entfern werden. Im Anschluss an die Waschanlage werden die Kunststoffkörper auf eine Rollenbahn mit aneinander geordneten Rollen gegeben, in den die gelösten Etiketten von den Kunststoffkörpern getrennt werden.

Aus der DE 103 08 500 A1 ist ein Verfahren sowie eine Vorrichtung zum trockenen Aufbereiten von Kunststoff-Hohlkörpern bekannt. Bei dem Verfahren bzw. der Vorrichtung zur Vorreinigung von Teilen aus Kunststoff im Rahmen eines Recycling-Prozesses werden Fremdkörper ausschließlich durch mechanische Beanspruchung der Teile in einem Gehäuse mit darin angeordnetem Rotor von diesen entfernt, wobei Gehäuse und Rotor relativ zueinander drehen. Der Rotor umfasst im Konkreten Schaufelwerkzeuge. Das Gehäuse bzw. der Siebkorb umfasst Bohrungen, Perforation oder Löcher, welche die Kunststoff-Hohlkörper oberflächlich anreißen. Teile der Kunststoff-Hohlkörper werden in den Löchern festgehalten und dann durch die Bewegung des Rotors bzw. dessen Schaufelwerkzeugen abgerissen. Dabei ist der Abstand zwischen Schaufelende und Siebkorbinnenfläche besonders wichtig und darf nicht zu groß ausfallen.

Problematisch bei dieser Konstruktion ist jedoch, dass es durch den geringen Abstand zwischen Schaufelende und Siebkorbinnenfläche zu Verstopfungen durch die Kunststoff-Hohlkörper im vorderen Teil der Maschine kommen kann. Die Kunststoff-Hohlkörper können wie ein Keil zwischen Siebkorb und Schaufelwerkzeug wirken und den Rotor zum Stehen bringen. Ein solcher Stillstand der Maschine kann zu Beschädigungen des Siebkorbs oder des Antriebs führen. Insbesondere für die Zuführung von zusammengepressten Kunststoffballen, in welcher Form nämlich Kunststoff-Hohlkörper häufig transportiert werden, ist bei dieser Konstruktion völlig ungeeignet. Des Weiteren beeinflusst ein solches Verstopfen den Durchsatz der Vorrichtung erheblich.

Das Problem der Verstopfung durch die Kunststoff-Hohlkörper ist in der DE 103 08 500 A1 erkannt und wird dort bereits eine Lösung geliefert, sind nämlich die ersten Schaufelwerkzeuge am Eingang des Gehäuses verkürzt ausgeführt. Dies löst jedoch das Problem einer Verkeilung im dahinter liegenden Bereich im Gehäuse zwischen Rotorschaufeln und dem Siebkorb nicht, sondern ermöglicht nur das Einführen von Flaschen. Auch die Handhabung von Kunststoff-Ballen wird dadurch nicht ermöglicht. Außerdem wird der erste Bereich mit verkürzten Schaufeln nicht optimal genutzt.

Der vorliegenden Erfindung liegt daher die Aufgabe zu Grunde, eine verbesserte Vorrichtung zur Vorreinigung von gebrauchten Kunststoffflaschen bereitzustellen.

Erfindungsgemäß ist die voranstehende Aufgabe durch die Merkmale des Patentanspruchs 1 gelöst. Danach ist die gattungsbildende Vorrichtung dadurch gekennzeichnet, dass die Beaufschlagungsmittel Messer umfassen, und dass die Kunststoffflaschen im Rahmen der mechanischen Beanspruchung zumindest geringfügig angeritzt oder angeschnitten, jedoch nicht zerkleinert werden.

In erfindungsgemäßer Weise ist zunächst erkannt worden, dass die voranstehende Aufgabe auf einfache Weise lediglich durch mechanische Beanspruchung in Form von Prallkräften, Deformation und leichtem Anritzen der zu recycelnden Kunststoffteile gelöst werden kann. Es ist gerade nicht notwendig das Gehäuse derart aufwendig auszugestalten, dass anhaftende Fremdkörper, bspw. Etiketten, in den Löchern, Perforationen etc. des Gehäuses festgehalten werden, um dann durch die Bewegung des Rotors abzureißen. Ganz im Gegenteil hat sich herausgestellt, dass es viel einfacher und effektiver ist, den Rotor derart auszugestalten, dass er die maßgeblichen Werkzeuge, nämlich Beaufschlagungsmittel in Form von Stäben, Flügeln, Paddel oder dgl. mit Messern umfasst.

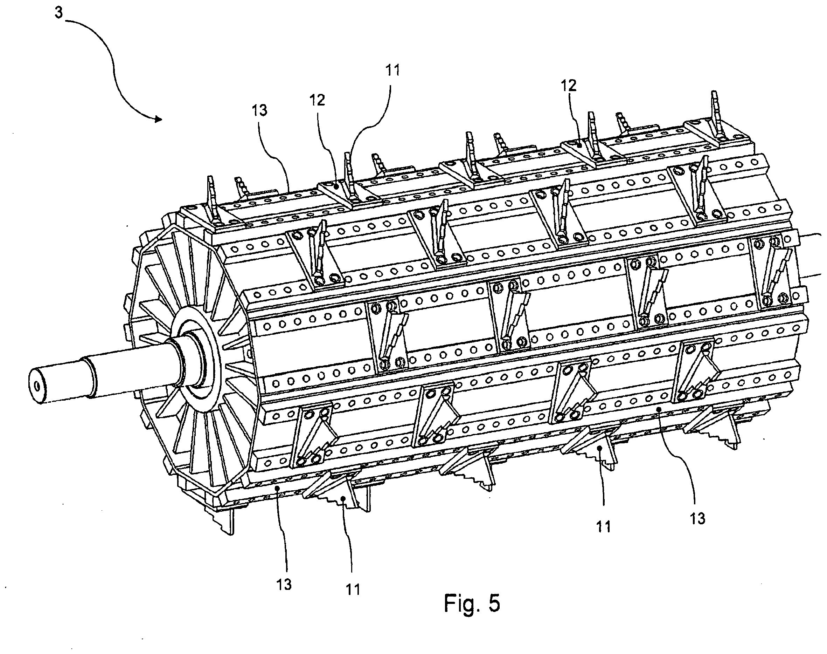

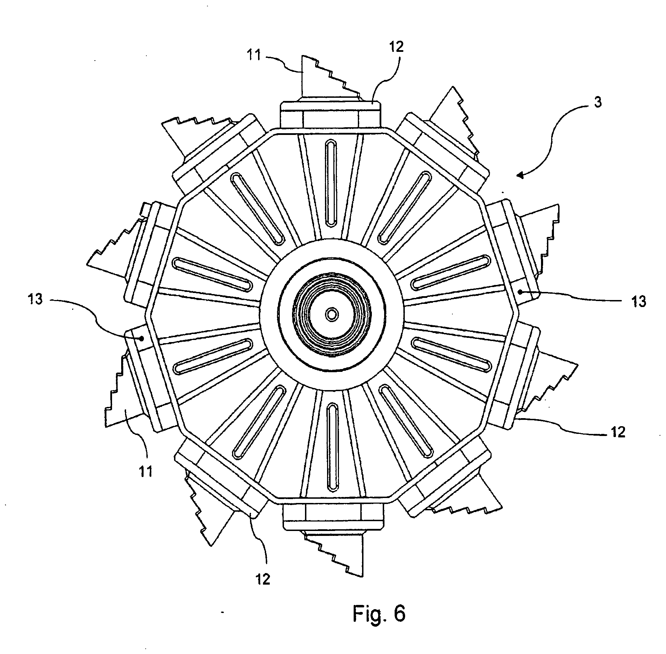

Des Weiteren ist erfindungsgemäß erkannt worden, dass bei einer derartigen Ausgestaltung des Rotors, wie sie insbesondere in Fig. 5 und 6 der Anmeldungsunterlagen gezeigt ist, eine Zwangsbeschickung, bspw. mit einer oder mehreren Förderschnecken, den Durchsatz erheblich begünstigt. Ganz im Gegenteil zu der gattungsbildenden Vorrichtung bzw. dem gattungsbildenden Verfahren ist es dabei eben nicht erforderlich, die Schaufeln des Rotors im Eingangsbereich des Gehäuses verkürzt auszuführen, um ein Verkeilen der Teile zwischen Gehäuse und Rotor zu vermeiden. Dadurch wird die gesamte Länge des Rotors effektiv zur Vorreinigung der Teile bzw. zum Entfernen von Fremdkörpern an den Teilen genutzt. Ganz besonders eignet sich für die Zwangsbeschickung die so genannte Schneckenzufuhr.

Die erfindungsgemäße Vorrichtung findet eine Lösung, die Kunststoff-Hohlkörper trotzt Nutzung von Messern nicht zu zerkleinern, sondern nutzt diese für die Steigerung der Effektivität, nämlich durch Anritzen der Kunststoffteile ohne jegliches Zerschneiden.

Insgesamt kann durch die erfindungsgemäße Vorrichtung eine besonders hohe Effektivität und hoher Durchsatz bei der Vorreinigung von Teilen erreicht werden, ohne das Gehäuse oder den Rotor äußerst aufwendig auszugestalten. Auch wird das Risiko eines Verstopfens durch das Verkeilen von Teilen zwischen Rotor und Gehäuse äußerst effektiv vermieden.

Folglich ist mit der beanspruchten Vorrichtung eine Vorrichtung angegeben, die einen hohen Durchsatz bei Kunststoff-Recycling sicherstellen.

Erfindungsgemäß ist erkannt worden, dass es ohne Weiteres möglich ist, die an den zu recycelnden Kunststoffteilen anhaftenden Fremdkörper auf einfache Weise durch mechanische Beanspruchung der Teile von diesen zu entfernen. Erfolgt die Beanspruchung auf rein mechanische Weise, ist eine Vorwäsche mit Dampf, welche äußerst energieaufwendig ist, nicht erforderlich. Des Weiteren ist für ein Verfahren zur Vorreinigung wesentlich, dass das Entfernen der Fremdkörper ohne vorherige Zerkleinerung der Teile bzw. PET-Flaschen erfolgt. Entsprechend wird die Mühle nicht durch abrasive Fremdkörper beansprucht. Ganz im Gegenteil werden nach dem Verfahren die aus Kunststoff bestehenden Teile - ohne vorgeschaltete Zerkleinerung - mechanisch derart beansprucht, dass sich die Fremdkörper, ganz gleich welcher Art, von den Kunststoffteilen lösen.

Durch die Bewegung der Kunststoffteile innerhalb der Vorrichtung kommt es zu einer Friktionsbildung (Reibung) der Kunststoffteile aneinander und an den Maschinenteilen, welche ebenfalls ein Ablösen von Verschmutzungen bewirkt, zumindest aber begünstigt.

Die Fremdkörper werden ausschließlich mechanisch von den Teilen bzw. PET-Flaschen entfernt. Die mechanische Beanspruchung kann eine Deformation der Teile bedeuten, so dass sich die Fremdkörper aufgrund der Deformation der Teile von diesen lösen. Im Konkreten ist es denkbar, dass die Teile durch Biegen, Stauchen und/oder Dehnen deformiert werden, wodurch ein Lösen der Fremdkörper von den Teilen erfolgt.

In ganz besonders vorteilhafter Weise werden die Fremdkörper von den Teilen bzw. PET-Flaschen regelrecht abgeschlagen. Dabei kann eine Zerkleinerung der Fremdkörper stattfinden, was das Trennen der Fremdkörper von den zu recycelnden Teilen begünstigt.

Sollten sich in den zu recycelnden Flaschen noch irgendwelche Restbestände an Flüssigkeit befinden, wäre es von Vorteil, die Flüssigkeit aus den Flaschen auslaufen zu lassen. Dazu könnten die Teile bzw. Flaschen im Rahmen der mechanischen Beanspruchung zumindest geringfügig angeritzt oder angeschnitten, jedoch nicht zerkleinert werden. Das Anritzen der Teile hat den Vorteil, dass beliebige Flüssigkeit nach außerhalb gelangt, ohne dass die Gefahr einer vorzeitigen Zerkleinerung der PET-Flaschen droht, wodurch eine Trennung zwischen dem PET-Material und den Fremdkörpern erschwert wäre.

Die zu recycelnden Teile bzw. Flaschen werden nach dem Sammeln üblicherweise zu Ballen verdichtet und entsprechend zusammengepresst. In dieser Form wird das zu recycelnde Material dem Recycling-Prozess zugeführt. Zur erfindungsgemäßen Vorreinigung wird der Ballen aufgelöst bzw. werden die Teile vereinzelt und in vereinzelter Form dem Vorreinigungsprozess zugeführt. Entsprechend erfolgt die Entfernung der Fremdkörper nach einer Auflösung des Ballens bzw. nach einer Vereinzelung der Teile, wodurch der Vorreinigungsprozess ganz erheblich begünstigt ist.

Des Weiteren ist es von ganz besonderem Vorteil, wenn die Entfernung der Fremdkörper über eine vorgebbare Verweilzeit und/oder eine vorgebbare Beanspruchungsintensität erfolgt. Beide Parameter sind einstellbar und lassen sich - möglichst in Abhängigkeit voneinander und in Abhängigkeit vom Material bzw. vom Verschmutzungsgrad - einstellen und optimieren.

Grundsätzlich ist es nicht auszuschließen, dass während des Vorreinigungsprozesses kleine Teile der PET-Flaschen von diesen abgetrennt und gemeinsam mit den Fremdkörpern separiert werden, wenngleich ausschließlich die Fremdkörper zu separieren sind. Insoweit ist es von Vorteil, wenn die von den Teilen gelösten und separierten Fremdkörper nebst Kunststoffteile einem abermaligen Trennprozess zugeführt werden, wonach Rest-Kunststoffteile der PET-Flaschen abermals getrennt und dem Recycling-Prozess zugeführt werden. Der tatsächliche Schmutz, d.h. die von den Flaschen gelösten Fremdkörper, beispielsweise Etiketten, Metall, etc., werden dann entsorgt oder einem weiteren Recycling-Prozess zugeführt.

An dieser Stelle sei angemerkt, dass dem beschriebenen Verfahren der eigentliche Recycling-Prozess folgt, wobei die von Fremdkörpern befreiten Teile bzw. Flaschen vorzugsweise über eine Fördereinrichtung dem weiteren Recycling-Prozess zugeführt werden, der dann in einer für sich bekannten Weise vollzogen wird.

Die erfindungsgemäße Vorrichtung umfasst ein Gehäuse mit einer Kammer zur Aufnahme der Teile bzw. PET-Flaschen, wobei in der Kammer Mittel zur mechanischen Beaufschlagung der Teile sowie Mittel zum Trennen der von den Teilen losgelösten Fremdkörper sowie zum Abführen der Fremdkörper und der Teile auf separaten Pfaden vorgesehen sind.

Mit anderen Worten werden die mechanisch gelösten Fremdkörper beispielsweise über ein Lochblech mit im Durchmesser geeignet definierten Löchern einer Fördereinrichtung zugeführt, möglichst unterhalb des Gehäuses bzw. der Kammer. Die Fremdkörper könnten dort über eine Förderschnecke in eine abermalige Trenneinrichtung gelangen, beispielsweise in einen Zyklon. Dort erfolgt eine abermalige Trennung der Fremdkörper von Rest-Kunststoffteilen, die dann wieder dem Recycling-Prozess zugeführt werden.

Die zur Vorreinigung dienende Kammer könnte als Zentrifugaleinrichtung oder Trommel ausgeführt sein. In dem Gehäuse bzw. in der Kammer ist ein Rotor mit Beaufschlagungsmitteln vorgesehen. Grundsätzlich ist es von Vorteil, wenn der innen angeordnete Rotor gegenüber dem Gehäuse dreht. Eine umgekehrte Funktion ist denkbar.

Die Beaufschlagungsmittel können unterschiedlich ausgebildet sein, beispielsweise als Stäbe, Flügel, Paddel oder dgl., und Messer umfassen, wobei die Stäbe, Flügel, Paddel oder dgl. zumindest teilweise mit Messern bestückt sind, die zum Anritzen der Kunststoffteile bzw. der PET-Flaschen dienen. An dieser Stelle sein angemerkt, dass in erfindungsgemäßer Weise im Rahmen der Vorreinigung keine Zerkleinerung der Teile bzw. PET-Flaschen stattfindet. Entsprechend sind die Messer derart auszulegen, dass die Flaschen allenfalls angeritzt, nicht jedoch zerschnitten werden.

Es gibt nun verschiedene Möglichkeiten, die Lehre der vorliegenden Erfindung in vorteilhafter Weise auszugestalten und weiterzubilden. Dazu ist auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Seitenansicht ein Ausführungsbeispiel einer erfindungsgemäßen Vorrichtung,

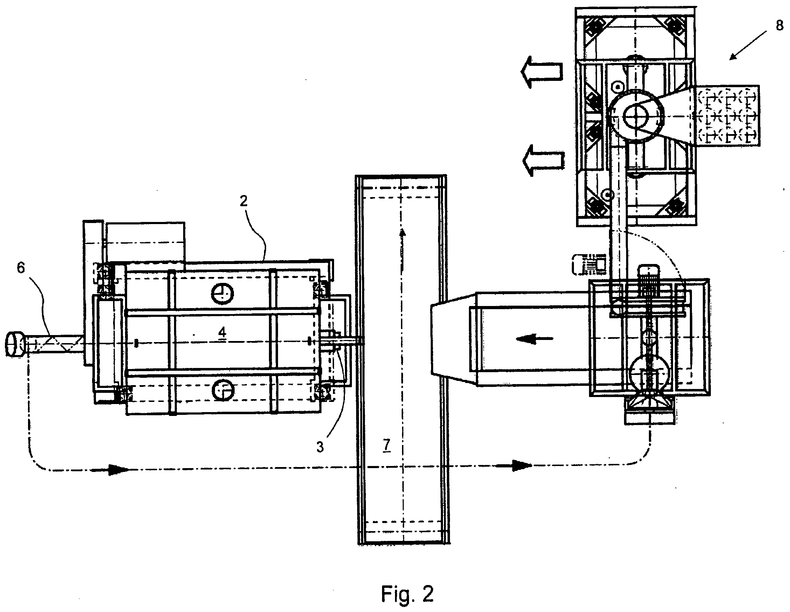

- Fig. 2: in einer schematischen Draufsicht den Gegenstand aus Fig. 1,
- Fig. 3: in einer schematischen Seitenansicht die Trennung etwaiger Rest-Kunststoffteile von den Fremdkörpern und
- Fig. 4a: in einem schematischem Diagramm den Ablauf eines Verfahrens zur Vorreinigung im Rahmen einer ersten Variante,
- Fig. 4b: in einem schematischen Diagramm den Ablauf des Verfahrens zur Vorreinigung im Rahmen einer zweiten Variante,
- Fig. 5: in einer schematischen Seitenansicht ein Ausführungsbeispiel eines mit Werkzeugen bestückten Rotors,
- Fig. 6: in einer schematischen Stirnansicht den Gegenstand aus Fig. 5 und
- Fig. 7: in einer schematischen Ansicht, gegenüber den Fig. 5 und 6 vergrößert, ein auf einer Halteplatte angeordnetes Werkzeug des Rotors.

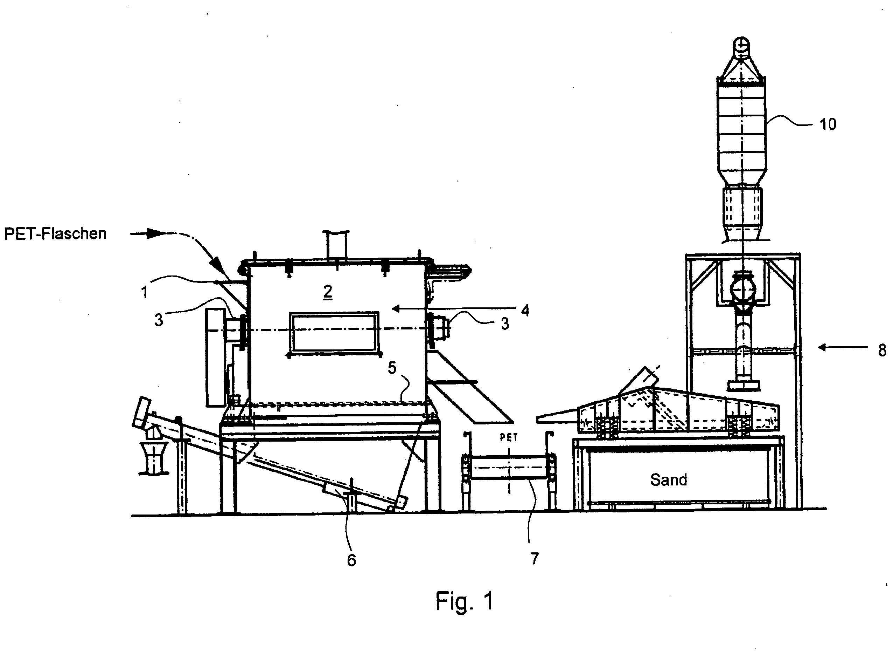

Fig. 1 zeigt in einer schematischen Seitenansicht ein Ausführungsbeispiel einer erfindungsgemäßen Vorrichtung, durch die sich das ein Verfahren zur Vorreinigung beschreiben lässt.

Bei dem hier gewählten Ausführungsbeispiel geht es um das Recyceln sogenannter PET-Flaschen, die der erfindungsgemäßen Vorrichtung vorzugsweise vereinzelt zugeführt werden. Die Zuführung erfolgt bei dem in Fig. 1 gezeigten Ausführungsbeispiel über einen Zuführschacht 1. Statt der Vorkehrung eines Zuführschachts könnte eine Zwangsbeschickung mit einer oder mehreren Förderschnecken vorgesehen sein, um nämlich den Durchsatz zu begünstigen. Außerdem eignet sich die Zwangsbeschickung, beispielsweise die sogenannte Schneckenzufuhr, insbesondere im Rahmen einer Rotorvariante entsprechend den Fig. 5 und 6, wonach diese unter Zugrundelegung einer Zwangsbeschickung besonders effektiv funktioniert.

Es sei angemerkt, dass die erfindungsgemäße Vorrichtung in idealer Weise trocken arbeitet, nämlich aufgrund der hier realisierten konstruktiven Merkmale.

Die in Fig. 1 gezeigte Vorrichtung umfasst ein Gehäuse 2 mit einer darin befindlichen Kammer. Innerhalb des Gehäuses 2 bzw. in der Kammer ist ein Rotor 3 angeordnet, der mit Schaufeln 4 bzw. Werkzeugen 11 ausgestattet ist. An den PET-Flaschen befindlicher Schmutz bzw. daran befindliche Fremdkörper, beispielsweise Etiketten, werden von den Schaufeln 4 bzw. Werkzeugen 11 regelrecht abgeschlagen.

Über ein Lochblech 5 gelangen die abgeschlagenen Fremdkörper auf bzw. in einen Schraubenförderer 6 und werden von dort einer weiteren Separierung zugeführt.

Die von den Fremdkörpern befreiten PET-Flaschen werden von der Vorrichtung bzw. aus dem Gehäuse 2 heraus auf ein Förderband 7 verbracht und von dort aus dem weiteren Recycling-Prozess zugeführt.

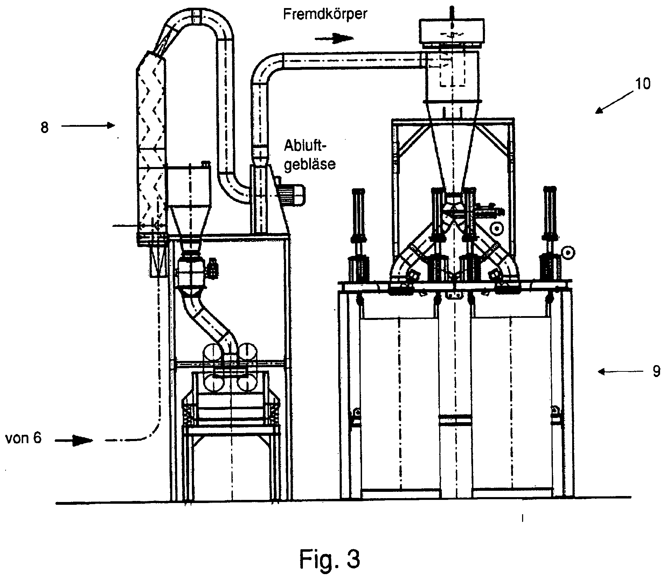

Die von den PET-Flaschen gelösten Fremdkörper gelangen über den Schraubenförderer 6 in eine davon unabhängige Trenneinrichtung 8, die einen Zick-Zack-Kanal und einen Zyklon 10 umfassen kann. Dort werden Rest-Kunststoffteile, die von den PET-Flaschen unbeabsichtigt abgeschlagen worden sind, von dem Fremdkörpern getrennt und dem Förderband 7 zugeführt, so dass auch diese Teile zum Recyceln zur Verfügung stehen. Der Rest, d.h. die Etiketten und der Schmutz bzw. die Fremdkörper, werden dann entsprechend der Darstellung in Fig. 3 einer Abfallstation 9 zugeführt, wobei auch hier eine Trennung vollzogen werden kann.

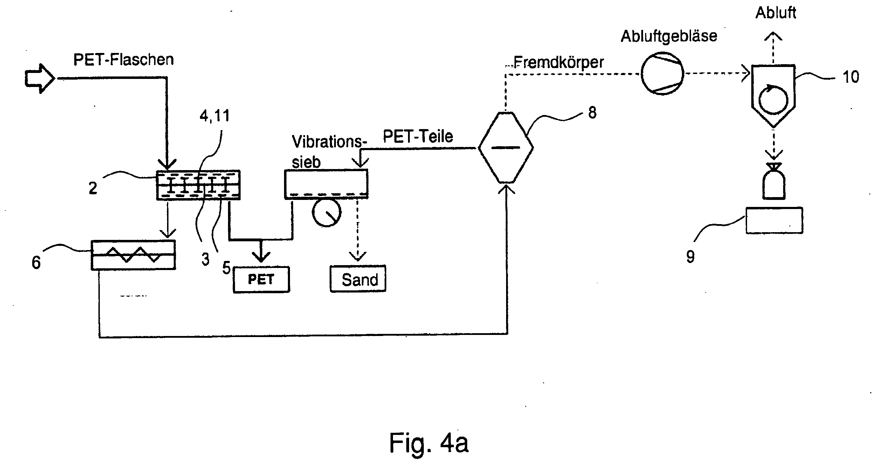

Fig. 4a zeigt in einem schematischen Diagramm den Ablauf eines Verfahrens zur Vorreinigung, wobei die zu recycelnden Teile bzw. PET-Flaschen - vereinzelt - der erfindungsgemäßen Vorrichtung und somit dem Gehäuse 2 zugeführt werden. In dem Gehäuse 2 ist der Rotor 3 mit den Schaufeln 4 angeordnet, wie dies in Fig. 4a angedeutet ist.

Abgeschlagene Etiketten, Schmutz, etc. gelangen vorzugsweise durch das Lochblech 5 hindurch über einen Schraubenförderer 6 zu einer weiteren Trenneinrichtung 8, die über Schwerkraft arbeiten kann. Davon getrennte Kunststoffteile lassen sich dem Recycling-Prozess zuführen.

Die von den Fremdkörpern befreiten PET-Flaschen werden aus dem Gehäuse 2 heraus auf das Förderband 7 gefördert und von dort aus dem weiteren Recycling-Prozess zugeführt. Wie bereits zuvor erwähnt, gelangen losgelöste Fremdkörper nebst Rest-Kunststoffteile über den Schraubenförderer 6 zu der weiteren Trenneinrichtung 8, wobei von dort aus die Rest-Kunststoffteile nach weiterer Trennung ebenfalls dem Förderband 7 und somit dem Recycling-Prozess zugeführt werden.

Die losgelösten Fremdkörper werden in konventioneller Weise vorzugsweise über einen Zyklon 10 einer Abfallstation 9 zugeführt, wobei dort ebenfalls eine sortenreine Trennung möglich aber nicht zwingend erforderlich ist.

An dieser Stelle sei angemerkt, dass die erfindungsgemäße Vorrichtung ganz ohne Sieb bzw. Lochblech ausgeführt sein kann, wonach nämlich die Fraktion innerhalb einer geschlossenen Trommel bzw. innerhalb eines geschlossenen Gehäuses 3 aus ungelochtem Blech durchgeführt wird. Nach dem Gerät bzw. dem Gehäuse 2 würde dann eine Trennung in Gut- und Schlechtfraktion stattfinden, um dort nämlich Flaschen und Etiketten bzw. Schmutz zu scheiden.

Auch ist es denkbar, dass nach der Vorrichtung anstelle einer konvertierenden Windsichtung eine Siebmaschine angeordnet ist, die zum Abzug der sogenannten Leichtfraktion besaugt wird. Eine solche Einrichtung kann eine Haube über der Siebmaschine umfassen, wobei in der Haube ein Absauganschluss vorgesehen ist. Letztendlich handelt es sich auch hier um eine Art Windsichter mit automatischer Absaugung.

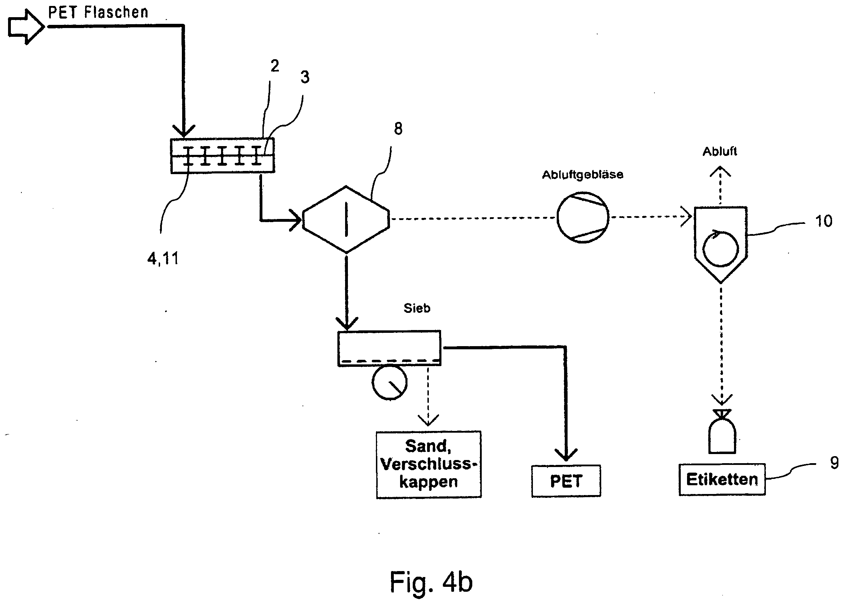

Fig. 4b zeigt in einem schematischen Diagramm eine weitere Variante eines möglichen Ablaufs eines Verfahrens zur Vorreinigung, wobei dort die mit Schmutz, Etiketten oder dergleichen behafteten PET-Flaschen der erfindungsgemäßen Vorrichtung zugeführt werden, nämlich dem Gehäuse 2, in dem ein Rotor 3 mit geeigneten Werkzeugen 11 angeordnet ist. Der Rotor 3 dreht relativ zu dem Gehäuse 2. Grundsätzlich ist eine Relativbewegung zwischen dem Rotor 3 und dem Gehäuse 2 erforderlich, ganz gleich, welches Bauteil sich dabei aktiv dreht.

Innerhalb des Gehäuses 2, auch Außentrommel genannt, werden Etiketten und Verschlusskappen von der eigentlichen PET-Flasche getrennt, ohne den Flaschenkopf zu zerstören bzw. abzuschlagen, wonach eine Separierung von Verschlusskappe und Flaschenhals nur noch mit erheblichem Aufwand oder gar nicht möglich wäre.

Jedenfalls gelangt das Zerkleinerungsgut von der Vorrichtung bzw. dem Gehäuse 2 in eine als Separierungsstufe zu verstehende Trenneinrichtung 8, die beispielsweise über Schwerkraft arbeiten kann.

In Bezug auf den im Gehäuse 2 angeordneten Rotor 3 ist wesentlich, dass der Rotor 3 in Kombination mit seinen Werkzeugen 11 (siehe Fig. 5, 6 und 7) und der Außentrommel bzw. dem Gehäuse 2 in der Lage ist, Etiketten und Verschlusskappen von den Behältern bzw. PET-Flaschen zu entfernen, ohne hierbei die Flaschenhälse zu zerstören. Dies ist von ganz besonderer Bedeutung, zumal eine Zerstörung der Behälterhälse zu einem Materialverlust im Recyclingprozess führen würde, da nämlich die Flaschenhälse mit den Verschlusskappen separiert werden müssten.

Bevorzugt ist die Außentrommel bzw. das Gehäuse 2 drehfest, wobei der Rotor 3 dreht. Eine umgekehrte Kinematik ist denkbar. Regelmäßig sind die Achsen von Gehäuse 2 bzw. Außentrommel und Rotor 3 koaxial angeordnet. Eine exzentrische Anordnung des Rotors 3 innerhalb des Gehäuses 2 ist denkbar bzw. kann sogar von Vorteil sein, um nämlich innerhalb des Gehäuses 2 Zonen mit unterschiedlicher Einwirkungsintensität in Bezug auf die Flaschen zu definieren.

Die in Fig. 4b gezeigte Trenneinrichtung 8 bzw. Separationsstufe dient zur Abscheidung der vereinzelten Etiketten noch vor der Siebmaschine bzw. dem Sieb, so dass dem Sieb lediglich das eigentliche Flaschenmaterial nebst Verschlusskappen zugeführt wird.

Fig. 5 zeigt in einer schematischen Seitenansicht ein Ausführungsbeispiel eines Rotors 3, wie er in dem Gehäuse 2 bzw. in der durch das Gehäuse 2 gebildeten Außentrommel angeordnet sein kann. Bei dem in Fig. 5 gewählten Ausführungsbeispiel ist der Rotor 3 im Querschnitt eckig ausgeführt, kann jedoch auch - nach Bedarf - entlang dem Umfang rund sein.

Fig. 5 zeigt deutlich, dass der Rotor 3 Befestigungsleisten 13 umfasst, die paarweise zur Anbringung der auf Halteplatten 12 angeordneten Werkzeuge 11 dienen. Die Werkzeuge 11 sind derart angeordnet, dass sie bei definierter Drehrichtung in Bezug auf das Zerkleinerungsgut einen Drall und somit eine Förderrichtung definieren. Bei dem in Fig. 5 gezeigten Ausführungsbeispiel ist die Drehrichtung im Uhrzeigersinn zu verstehen.

Der in Fig. 5 gezeigte Rotor 3 dreht mit einer Relativbewegung zum Gehäuse 2, wobei das Gehäuse 2 bzw. die durch das Gehäuse 2 gebildete Außentrommel drehfest ist. Die Achsen von Rotor 3 und Gehäuse 2 sind koaxial angeordnet.

Fig. 6 zeigt den Gegenstand aus Fig. 5 in einer Stirnansicht, wobei dort besonders gut die eckige Ausgestaltung des Rotors 3 und die gestufte Ausführung der Werkzeuge 11 zu erkennen ist. Auch lässt Fig. 6 deutlich erkennen, dass die Werkzeuge 11 auf Halteplatten 12 montiert sind, die wiederum auf den Befestigungsleisten 13 sitzen. Die Halteplatten 12 sind vorzugsweise auf den Befestigungsleisten 13 verschraubt. Ein Austausch einzelner Werkzeuge 11 bzw. Halteplatten 12 ist jederzeit möglich.

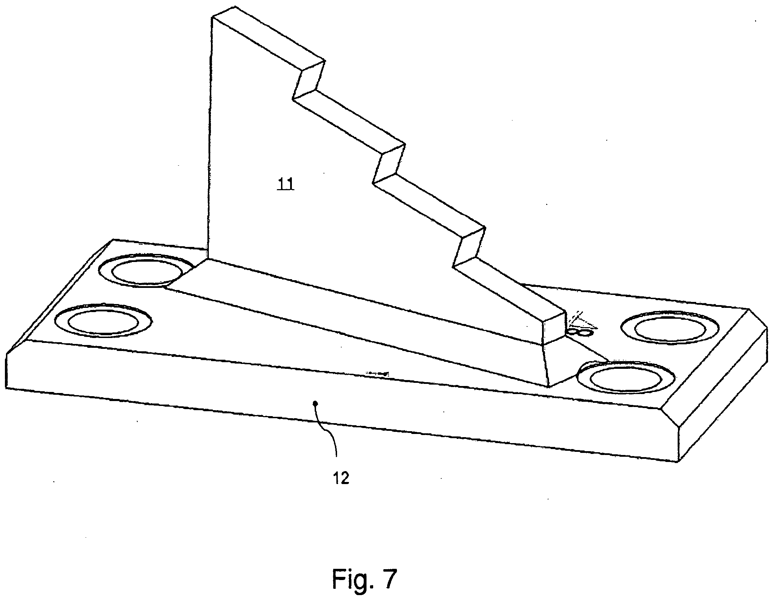

Fig. 7 zeigt im Detail, vergrößert, eine Halteplatte 12 mit darauf angeordnetem Werkzeug 11, wobei das Werkzeug 11 abgewinkelt angeordnet ist, woraus sich beim Drehen des Rotors 3 die Förderrichtung des Materials ergibt.

Die im Gehäuse 2 bzw. am Rotor 3 vorgesehenen Beaufschlagungsmittel - Werkzeuge 4,11 - können am Rotor 3 fest angebracht oder dort in der Position und im Winkel verstellbar sein, um auf die Verweilzeit der zu behandelnden Teile in der Vorrichtung Einfluss nehmen zu können. Im Konkreten können die Beaufschlagungsmittel in tangentialer Richtung starr oder beweglich am Rotor 3 befestigt sein.

Der Rotor 3 selbst kann in dem Gehäuse 2 bzw. in der Trommel zentrisch oder exzentrisch zur Trommelachse angeordnet sein, wobei die Trommel bzw. das Gehäuse 2 zylindrisch oder konisch zur Drehachse des Rotors 3 ausgebildet sein kann.

Ebenso ist es denkbar, dass die Trommel oder das Gehäuse 2 auf der Innenseite mit Elementen bestückt ist, welche die Flugbahn der aufgegebenen Teile beeinflussen.

Der Materialeintrag in die Vorrichtung, d. h. in das Gehäuse 2 hinein, ist vorzugsweise tangential zur Umfangbewegung des Rotors 3 in Richtung der Drehbewegung des Rotors 3 angeordnet.

Der Materialaustrag aus der Vorrichtung bzw. aus dem Gehäuse 2 ist vorzugsweise tangential zur Umfangsbewegung des Rotors 3 in Richtung der Drehbewegung des Rotors 3 ausgerichtet.

Des Weiteren sei angemerkt, dass die erfindungsgemäße Vorrichtung nicht nur zur bloßen Behandlung der Teile dient, vielmehr eine weitere Funktion innehat, nämlich das Auflösen von Ballen und Briketts und diese mit der eigentlichen Funktion der Vorreinigung vereint.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel der erfindungsgemäßen Lehre lediglich zur Erörterung der beanspruchten Lehre dient, diese jedoch nicht auf das Ausführungsbeispiel einschränkt.

### Bezugszeichenliste

- 1: Zuführschacht
- 2: Gehäuse, Außentrommel
- 3: Rotor
- 4: Schaufel
- 5: Lochblech
- 6: Schraubenförderer
- 7: Förderband
- 8: Trenneinrichtung, Separationsstufe
- 9: Abfallstation
- 10: Zyklon
- 11: Werkzeug
- 12: Halteplatte für das Werkzeug
- 13: Befestigungsleiste

## Patentansprüche

1. Vorrichtung zur Vorreinigung von gebrauchten Kunststoffflaschen im Rahmen eines Recycling-Prozesses, wobei an den Kunststoffflaschen zu entfernende Fremdkörper anhaften, nämlich Etiketten und Verschmutzungen, wobei die Fremdkörper ausschließlich durch mechanische Beanspruchung der Kunststoffflaschen in einem Gehäuse (2) mit darin angeordnetem Rotor (3) von diesen entfernt werden, wobei Gehäuse (2) und Rotor (3) relativ zueinander drehen, wobei die Zuführung der Kunststoffflaschen über Zwangsbeschickung in das Gehäuse (2) erfolgt, wobei das Gehäuse (2) aus ungelochtem Blech ausgeführt ist, und wobei der Rotor (3) mit Beaufschlagungsmitteln ausgestattet ist, die als Stäbe, Flügel, Paddel oder dgl. ausgebildet sind,
**dadurch gekennzeichnet, dass** die Beaufschlagungsmittel Messer umfassen, und dass die Kunststoffflaschen im Rahmen der mechanischen Beanspruchung zumindest geringfügig angeritzt oder angeschnitten, jedoch nicht zerkleinert werden.

2. Vorrichtung nach Anspruch 1, **dadurch gekennzeichnet, dass** das Gehäuse (2) mit der darin ausgebildeten Kammer als Zentrifugaleinrichtung ausgeführt ist.

3. Vorrichtung nach Anspruch 1 oder 2, **dadurch gekennzeichnet, dass** das Gehäuse (2) mit der Kammer als Trommel ausgeführt ist.

## Claims

1. Device for pre-cleaning used plastics bottles in the context of a recycling process, with foreign bodies which have to be removed bonding to the plastics bottles, that is to say, labels and contamination, wherein the foreign bodies are removed therefrom exclusively by mechanical loading of the plastics bottles in a housing (2) having a rotor (3) arranged therein, the housing (2) and the rotor (3) rotating relative to each other, wherein the supply of the plastics bottles is carried out by means of forced charging into the housing (2), the housing (2) being constructed from non-perforated sheet metal and the rotor (3) being provided with admission means, which are in the form of rods, wings, paddles or the like,
**characterised in that** the admission means comprise blades and **in that** the plastics bottles are at least slightly scored or cut in the context of the mechanical loading but not comminuted.

2. Device according to claim 1, **characterised in that** the housing (2) with the chamber formed therein is constructed as a centrifugal device.

3. Device according to claim 1 or 2, **characterised in that** the housing (2) with the chamber is constructed as a drum.

## Revendications

1. Dispositif pour le pré-nettoyage de bouteilles de matière plastique usagées dans le cadre d'un processus de recyclage, dans lequel des corps étrangers adhèrent aux bouteilles en matière plastique, à savoir des étiquettes et des salissures, dans lequel les corps étrangers sont éliminés exclusivement par une sollicitation mécanique des bouteilles en matière plastique dans un boîtier (2) avec un rotor (3) disposé à l'intérieur, dans lequel le boîtier (2) et le rotor (3) tournent l'un par rapport à l'autre, dans lequel l'introduction des bouteilles en matière plastique dans le boîtier (2) a lieu par alimentation forcée, dans lequel le boîtier (2) est réalisé à partir d'une tôle non perforée et dans lequel le rotor (3) est équipé de moyens de sollicitation qui sont conçus comme des tiges, des ailettes, des palettes ou autres,
**caractérisé en ce que** les moyens de sollicitation comprennent des couteaux et **en ce que**, dans le cadre de la sollicitation mécanique, les bouteilles en matière plastique sont au moins légèrement entaillées ou découpées, mais pas broyées.

2. Dispositif selon la revendication 1, **caractérisé en ce que** le boîtier (2) avec la chambre réalisée à l'intérieur est réalisé sous la forme d'un dispositif centrifuge.

3. Dispositif selon la revendication 1 ou 2, **caractérisé en ce que** le boîtier (2) avec la chambre est réalisé sous la forme d'un tambour.
